# EUROPÄISCHE PATENTSCHRIFT

(11) **EP 0 860 831 B1**
(45) Veröffentlichungstag und Bekanntmachung des Hinweises auf die Patenterteilung: **13.10.2004**
(21) Anmeldenummer: 98102764.2
(22) Anmeldetag: 18.02.1998
(51) Int. Cl.: G11B 33/04, G11B 23/023

(54) **Vorrichtung zur Aufnahme von mehreckigen Datenträgern oder von in mehreckigen Gehäusen oder Hüllen angeordneten Datenträgern**
Device for receiving multiple angle formed datacarriers or for multiple angle housing or covers containing a datacarrier
Dispositif pour accueillir des supports pour des données numérique à multi-angles ou pour des cases à multi-angles ou des enveloppes contenants des supports de données numériques

(30) Priorität: 24.02.1997 DE 19707091
(43) Veröffentlichungstag der Anmeldung: 26.08.1998
(73) Patentinhaber: SCHÜCO International KG, 33609 Bielefeld (DE)
(72) Erfinder: Diekmann, Bernd, Dipl.-Ing., 33790 Halle (DE); Tönsmann, Armin, Dipl.-Ing., 33818 Leopoldshöhe-Bexterhagen (DE); Höcker, Eitel-Friedrich, Dipl.-Ing., 33739 Bielefeld (DE); Obst, Friedhelm, 33829 Borgholzhausen (DE)
(74) Vertreter: Stracke, Alexander, Dipl.-Ing.

(56) Entgegenhaltungen:
- EP-A- 0 457 036
- EP-A- 0 471 909
- WO-A-86/03327
- US-A- 4 627 535
- US-A- 4 775 049

## Beschreibung

Die vorliegende Erfindung betrifft eine Vorrichtung zur Aufnahme von mehreckigen Datenträgern oder von in mehreckigen Gehäusen oder Hüllen angeordneten Datenträgern, die jeweils zwischen zwei nach innen ragenden, mit Stütz-, Anlage- oder Anschlagflächen versehenen Auslegern von Lagerteilen zwischen einer nach vorn und einer nach hinten geneigten Schräglage verschwenkbar sind, wobei die Ausleger prismenförmig ausgebildet und im Abstand von dem Boden einer U-förmigen Aufnahme angeordnet sind.

Eine Vorrichtung der gattungsgemäßen Art ist aus der EP-A 0 471 909 bekannt.

Diese Anmeldung geht von einem Regalboden aus, der jeweils an seinen Längsstirnseiten eine gerasterte Auflage 2 besitzt, auf der Profile 5 mit einseitig oder beidseitig hinterschnittenen Nuten mittels Flachprofilen 4 festgelegt werden. In die hinterschnittenen Nuten des Profiles 5 werden Einsatzstücke 14 eingeschoben, die jedes ein prismenförmiges Lagerteil 17 aufweisen. Zwischen jeweils zwei Lagerteilen 17 wird ein Datenträgergehäuse eingestellt, dass sich an die Prismenflächen wechselseitig anlegt, wobei die wechselseitige Lage des Datenträgers ca. ± 20° zur Senkrechten beträgt. Je nach Breite der Datenträger können die Profile 5 in entsprechenden Abständen auf dem Regalboden zwischen den Rastleisten 2 angeordnet und festgelegt werden. Die prismenförmigen Lagerteile 17 bzw. 9 sind so angeordnet, dass das Lagergut je nach Schwenkrichtung wechselseitig an den Flächen 12 und 10 oder 11 und 13 zur Anlage kommt.

Aus der Figur 5 der erwähnten Literaturstelle geht dabei hervor, dass die Unterkante des Anlageprismas 7 nicht mit einer Unterkante des Datenträgers übereinstimmt, sondern gegenüber dieser Kante vorsteht oder aber zurückspringt. Dadurch beeinflussen sich die Datenträgergehäuse beim gegenseitigen Verschwenken oder aber der optimale Führungsgrad wird nicht erreicht.

Der Erfindung liegt die Aufgabe zugrunde, eine Vorrichtung der gattungsgemäßen Art so auszubilden, dass die Funktionsteile einen Bausatz bilden, der die Herstellung abgewandelter Konstruktionen der Aufnahme ermöglicht, wobei jeweils eine hohe Packungsdichte der Datenträger oder der Datenträgergehäuse angestrebt wird.

Diese Aufgabe wird erfindungsgemäß gelöst durch die Merkmale des Anspruches 1.

Hierdurch ergibt sich ein flexibles komfortables Ablagesystem für Datenträger oder für die Hüllen oder Gehäuse der Datenträger, dass in einfacher Weise an vorgegebene Fachlängen angepasst werden kann.

Der Boden der im Querschnitt U-förmigen Aufnahme für die Datenträger oder deren Gehäuse oder Hüllen ist als glatter Boden ausgebildet, der in einfacher Weise gereinigt werden kann.

Zur Erzielung einer geringen Bauhöhe, zur guten Handhabung und Recherchierbarkeit sowie einer großen Packungsdichte bildet der Boden der Aufnahme das Auflager für die mehreckigen Datenträger bzw. für die Datenträgergehäuse oder für die Datenträgerhüllen. Die Ausleger der Lagerteile sind im Abstand von der Bodenfläche angeordnet, wobei die mit Stütz- und Anlageflächen versehenen Ausleger prismenförmig ausgebildet sind.

Bei einer vorteihaften Ausführungsform der Aufnahme fällt die untere Spitze des prismenförmigen Auslegers mit der benachbarten Ecke des gekippten Datenträgers oder des gekippten Datenträgergehäuses zusammen oder nahezu zusammen.

Weitere Merkmale der Erfindung ergeben sich aus den Unteransprüchen zu den nebengeordneten Ansprüchen.

Ausführungsbeispiele der erfindungsgemäßen Vorrichtung sind in den Zeichnungen dargestellt und werden im folgenden beschrieben.

Es zeigen:
- Figur 1: ein Ausführungsbeispiel der Vorrichtung mit zwei eingesetzten Registerblättern in perspektivischer Darstellung,
- Figur 2: die Bauteile der Ausführung nach der Fig. 1 in demontiertem Zustand und in perspektivischer Darstellung,
- Figur 3: die Ausführung nach den Fig. 1 und 2, ausgerüstet mit fünf Lagerteilen, im Längsschnitt,
- Figur 3a: einen Teilschnitt durch das U-förmige Profil der Aufnahme,
- Figur 4: eine Lagerteilreihe im Aufriß,
- Figur 5: den der Fig. 4 entsprechenden Grundriß,
- Figur 6: einen Ausleger eines Lagerteils in vergrößertem Maßstab,
- Figur 7: einen Ausleger und die zugehörige Grundplatte eines Lagerteils im Schnitt,
- Figur 8: das U-förmige Profil der Aufnahme mit einem eingesetzten Lagerteil in der Ausführung nach der Fig. 7,
- Figur 9: zwei benachbarte Ausleger sowie die zugeordnete Bodenfläche in vergrößertem Maßstab,
- Figur 10: eine Auslegerreihe mit zugeordneter Bodenfläche und mit eingesetzten Datenträgergehäusen,
- Figur 11 und 12: weitere Ausführungsformen für den Aufbau des U-förmigen Querschnitts der Aufnahme für Datenträger bzw. deren Verpackungen,
- Figur 13: eine weitere Abwandlungsform im Aufriß und
- Figur 14: den der Fig. 13 entsprechenden Grundriß,
- Figur 15: ein weiteres Ausfühnungsbeispiel in perspektivischer Daistenllung und
- Figur 16: eine Lagerteilreihe nach Fig. 15 im Aufriß.

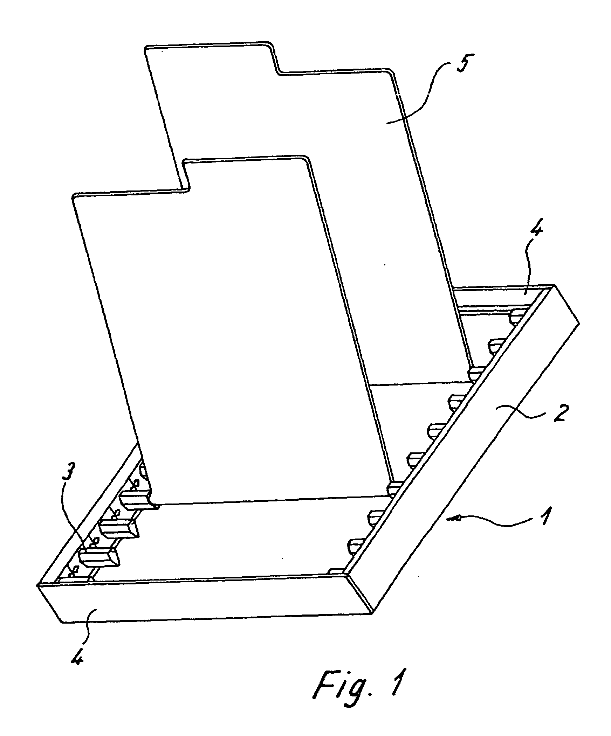

Die in den Fig. 1 und 2 dargestellte Vorrichtung 1 setzt sich aus einem U-förmigen Basisprofil 2, aus Lagerteilen 3 und Endkappen 4 zusammen. Ferner sind in diesen Figuren zwei Registerblätter 5 dargestellt.

Das Basisprofil 2, das den Grundkörper der Vorrichtung bildet, weist seitliche Schenkel 6 auf, die an der Innenseite mit hinterschnittenen Nuten 7 zur Aufnahme von Grundplatten 8 der Lagerteile 3 ausgerüstet sind.

Das Basisprofil 2 bildet auch die Grundplatte 2a der Vorrichtung 1.

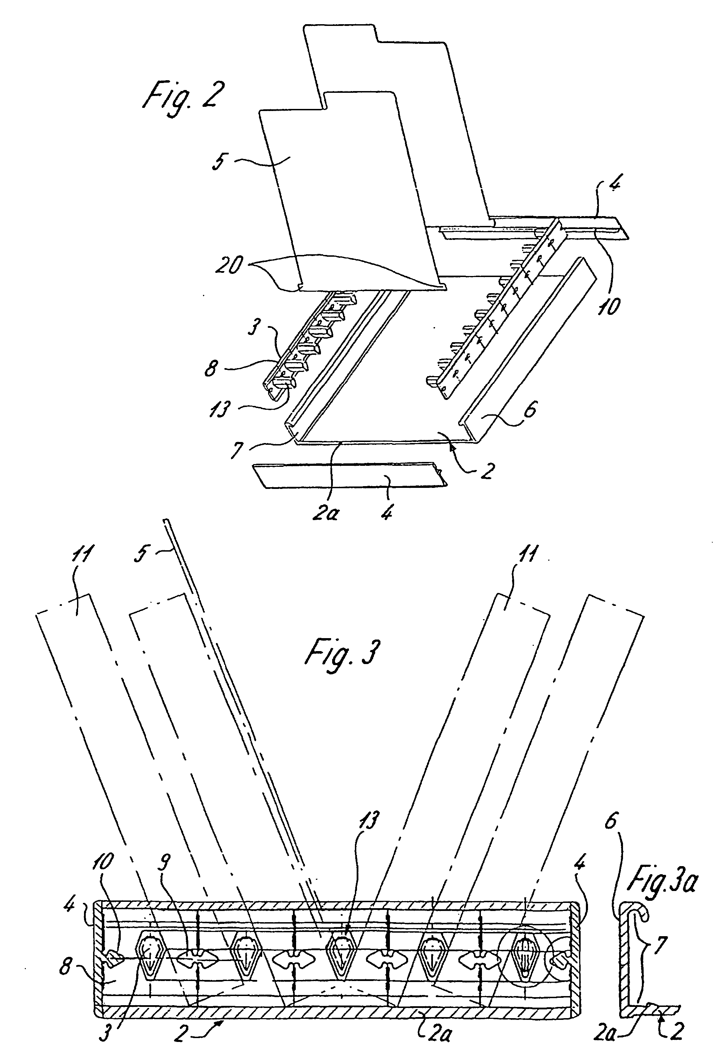

Die Fig. 3 zeigt die Vorrichtung 1 im Längsschnitt mit Blick auf eine Reihe von Lagerteilen 3. Zwischen zwei benachbarten Lagerteilen 3 sind jeweils Datenträger bzw. deren Gehäuse 11 in gekippter Stellung aufgezeigt. Ferner ist in der Fig. 3 ein Registerblatt 5 in gekippter Lage dargestellt.

Jedes Lagerteil 3 besteht aus einer Grundplatte 8 und einem Ausleger 13.

Aus der Fig. 3 ist erkennbar, daß die Grundplatten 3 in der Nähe der Stirnseiten, die sich quer zur Längsrichtung der seitlichen Schenkel 6 erstrecken, zu den Stirnseiten geöffnete Rastausnehmungen 9 aufweisen. Die am Anfang und am Ende des Basisprofiles 2 angeordneten Grundplatten können somit zur Festlegung der Endkappen 4 verwendet werden.

In dem dargestellten Ausführungsbeispiel ist die Endkappe 4 als ein Strangprofil ausgebildet, das als Kopplungsstück einen Raststeg 10 aufweist, der pfeilförmig im Querschnitt gestaltet ist. Dieser pfeilförmige Raststeg kann in die in der Kontur entsprechende Rastausnehmung der zugeordneten Grundplatte 8 eingeführt werden. Der Raststeg 10 ist endseitig um die Dicke der Wandung des seitlichen Schenkels 6 zurückgestanzt. Die Endkappen 4 weisen eine Länge auf, die der Breite des Basisprofiles 2 entspricht. Nach dem Einsetzen der Lagerteile 3 in die Nuten 7 der seitlichen Schenkel 6 kann dann das Basisprofil endseitig durch die Endkappen 4 verschlossen werden. Die Endkappen 4 werden somit form- und kraftschlüssig in den Rastausnehmungen 9 der Lagerteile 3 gehalten.

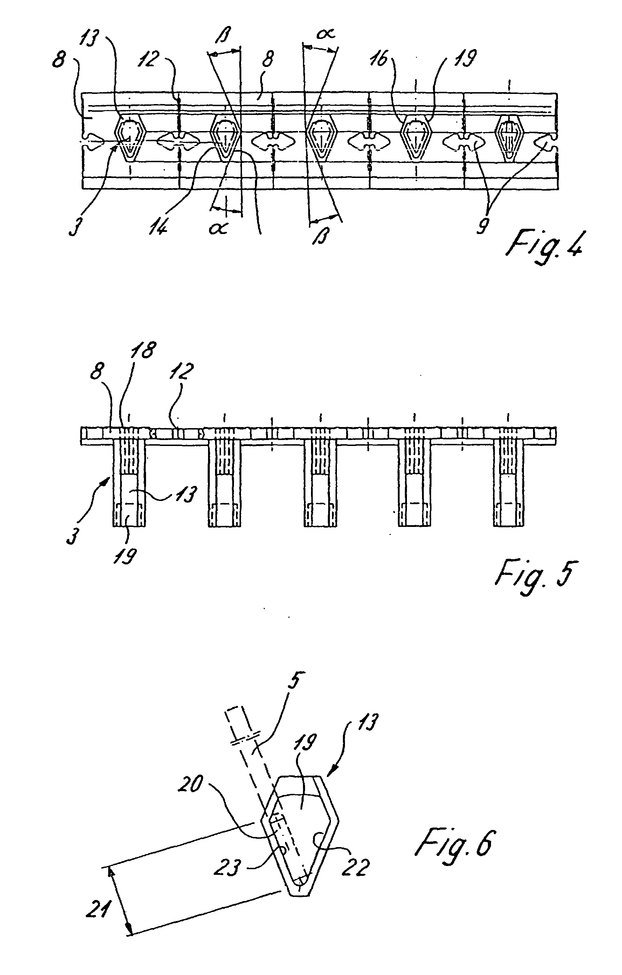

Die Fig. 4 zeigt fünf nebeneinander angeordnete Lagerteile, die als Baueinheit einstückig gefertigt werden. Die Grundplatten 8 sind am Übergang zur nächsten Grundplatte mit einer Sollbruchstelle versehen, so daß aus der Lagerteilreihe ein Lagerteil durch Abbrechen vereinzelt werden kann. Hierdurch besteht in einfacher Weise die Möglichkeit, eine Anpassung an die jeweils vorhandene Länge der Aufnahme vorzunehmen.

Es ergibt sich ferner die Möglichkeit, einzelne Lagerteile 3 auf eine größere Distanz zu setzen und diese Distanz durch eine Distanzplatte 29 festzulegen. Hierdurch bietet sich die Möglichkeit eine Doppelt- oder Dreifachkassette, die z.B. bei Musik-CDs vorhanden sind, einlagern zu können.

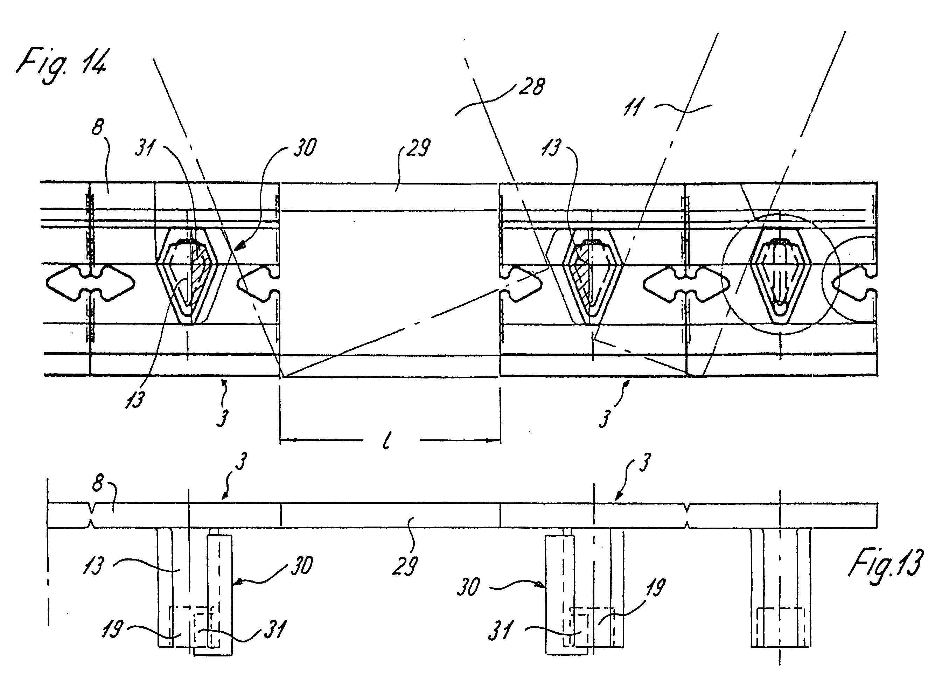

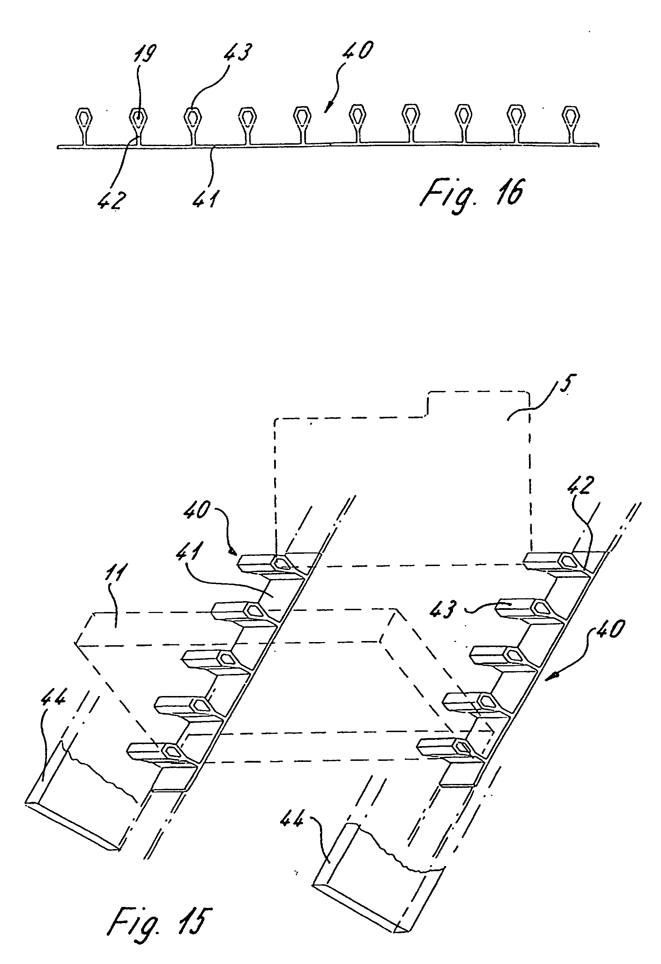

Gemäß den Fig. 13 und 14 ist bei der Vorrichtung 1 auch die Möglichkeit gegeben, einen breiteren Datenträger 28 bzw. desssen Gehäuse einzusetzen, wie er z.B. in Form einer Mehrfachkassette bei CD-Rom-Musikdatenträgern üblich ist. In diesem Fall werden zwei Lagerteile 3 bzw. deren Ausleger 13 mittels eines Distanzteiles 29 so weit auf Distanz gesetzt, daß der Datenträger 28 eingelagert werden kann und in der Lagerposition in beiden Richtungen, also nach vorn und nach hinten, schwenkbar ist. Aufgrund der Breite von ca. 25 mm gegenüber der Breite der Normal-CD-Rom-Gehäuse von 10 mm werden die Ausleger 13 mit einem Zusatzteil 30 zur Flächenverbreiterung ausgerüstet. Eine Befestigungsfuß 31 des Zusatzteiles greift durch eine stirnseitige öffnung des Auslegers in eine Ausnehmung 19 ein. An diesen angepaßten Bereich schließen sich dann die Lagerteile 3 wieder in normalem Abstand an.

Die Lagerteile 3 können einzeln ausgebildet und montiert werden. Es besteht auch die Möglichkeit, Lagerteilgruppen einstückig zu fertigen und diese mit einzelnen Lagerteilen zu kombinieren. Weiterhin ist die Möglichkeit gegeben, die Lagerteile, die einem seitlichen Schenkel 6 des Basisprofils 2 zugeordnet werden, einstückig auszubilden.

Durch die zwischen den einzelnen Grundplatten der Lagerteile auch bei einstückiger Fertigung einer Lagerteilreihe vorgesehenen Sollbruchstellen ist eine einfache Anpaßbarkeit auf eine gewünschte Baulänge geben.

Nach den Fig. 4 und 5 bilden fünf Lagerteile 3 eine Montageeinheit. Diese Ausleger 13 eines jeden Lagerteils 3 sind mit der Grundplatte 8 einstückig und mit Stützflächen 14, 15 sowie mit Auflageflächen 16 und 17 versehen. Die Stützfläche 14 und die Auflagefläche 17 sind im Winkel β zur Senkrechten geneigt, während die Stützfläche 15 und die Auflagefläche 16 im Winkel α zur Senkrechten angeordneten sind.

Im vorliegenden Fall sind der Winkel α und der Winkel β gleich, da hinsichtlich dieses Winkels zum Verschwenken der Datenträgergehäuse 11 beidseitig der gleiche Kippwinkel gewählt ist. Die unterschiedliche Gestaltung der Winkel α und β macht es jedoch möglich, unterschiedliche Kippwinkel der zu lagernden Datenträger bzw. Datenträgergehäuse zu realisieren.

Der Ausleger 13 eines jeden Lagerteils weist gemäß der Darstellung in der Fig. 4 dadurch eine Prismenform auf, die nach unten nicht in einer Spitze sondern in eine leichte Rundung ausläuft, während an der Oberseite eine deutliche Abflachung vorgesehen ist, um die Bauhöhe auf das Notwendige zu begrenzen.

Die Ausleger 13 sind von der Grundplattenseite aus gesehen, mit einer Ausnehmung 18 ausgerüstet, die allein der Materialeinsparung dient. Die Ausleger 13 weisen ferner eine Ausnehmung 19 auf, die zur freien Stirnfläche des Auslegers 13 geöffnet ist. Die Ausnehmung 19 entspricht in ihrer Kontur der prismenförmigen Außenkontur des Auslegers 13, wie dies aus der Fig. 6 zu entnehmen ist.

Diese Ausnehmung 19 dient als Lagerausnehmung für das schwenkbare Festlegen jeweils eines Registerblattes 5. Die Registerblätter 5 sind mit Lagerzapfen 20 ausgerüstet. Diese Lagerzapfen sind nicht rund gestaltet sondern haben eine Längsausdehnung 21, die der Innenanschlagfläche 22 der Ausnehmung 19 entspricht. Die Innenanschlagflächen 22 weisen zwangsläufig die gleiche Kippneigung auf wie die in die Aufnahme einzusetzenden Datenträger bzw. Datenträgergehäuse, da die Fläche 22 zur Stützfläche 14 bzw. 15 parallel verläuft. Somit kann jedem Lagerteil 3 ein Registerblatt 5 zugeordnet werden.

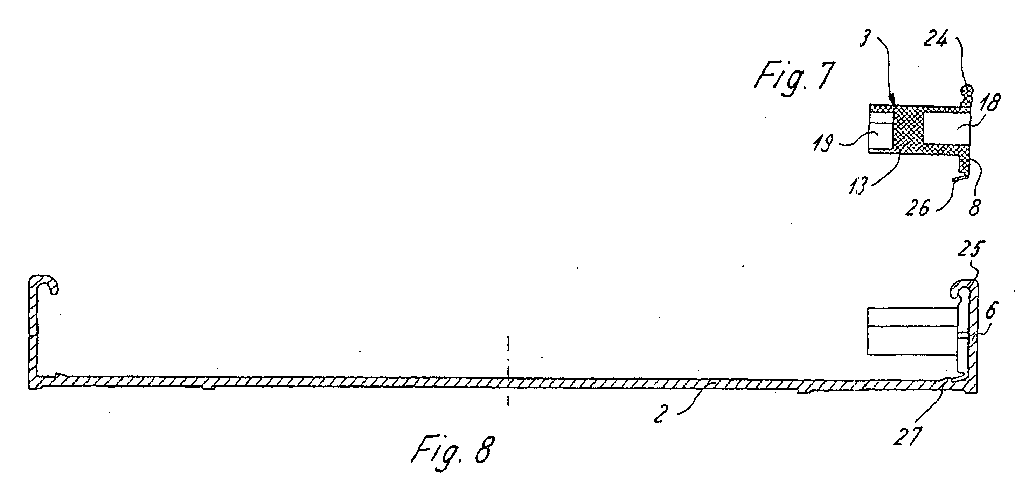

Die Fig. 7 zeigt das Lagerteil 3 im Schnitt, aus dem die Ausnehmung 19 sowie die Ausnehmung 18 zu entnehmen sind. Ferner ist aus dieser Darstellung zu erkennen, daß die Grundplate 8 der Ausbildung der Nut 7 der Basisprofils 2 angepaßt ist.

In vorteilhafter Weise weist die Grundplatte im oberen Bereich einen Wulstrand 24 auf, der formschlüssig in die bogenförmige Kontur 25 der Nut 7 eingesetzt werden kann. Am unteren Längsrand ist die Grundplatte mit einer federnden Lippe ausgerüstet, die eine Nockenleiste 27 des Basisprofils 2 untergreift. Diese Ausbildung der Grundplatte 8 machte es möglich, daß das Lagerteil 3 nicht nur in die hinterschnittene Nut 7 einzuschieben ist, sondern daß einzelne Lagerteile als auch eine zusammengesetzte einstückige Baugruppe von Lagerteilen in die Nut 7 an jeder Stelle einrasten können. Hierdurch wird eine besonders günstige Montagemöglichkeit für die einzelnen Lagerteile oder für eine einstückige Lagerteilreihe erreicht.

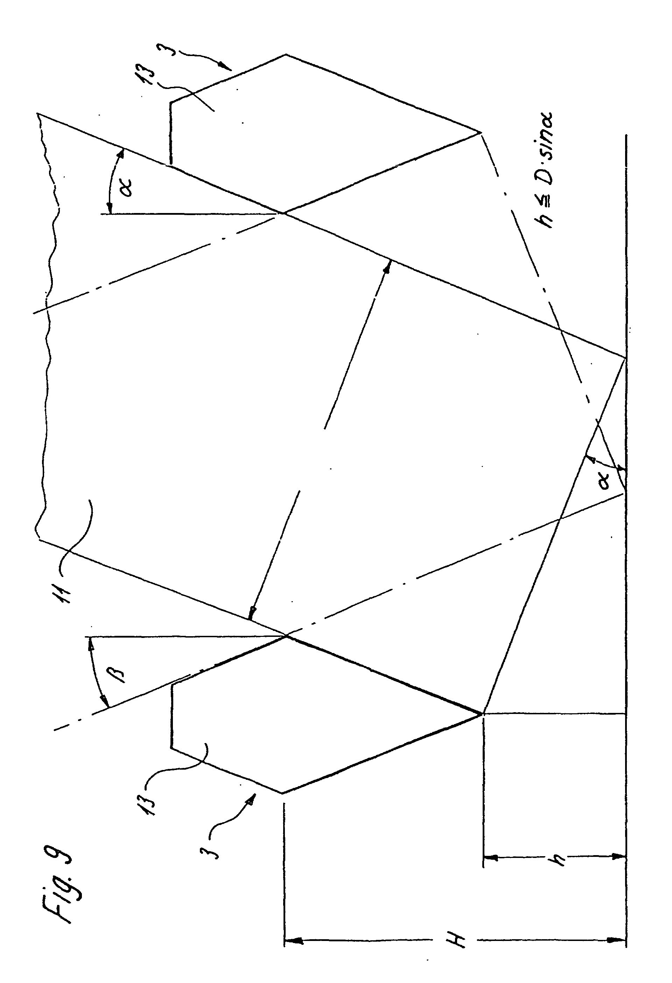

In der Fig. 8 ist das Basisprofil 2 im Querschnitt aufgezeigt und an einer Seite mit eingebautem Lagerteil versehen. Auch aus dieser Darstellung ergibt sich, daß das Lagerteil 3 oder eine Lagerteilgruppe nicht nur durch Einschieben in die Nut 7 sondern auch durch Einklipsen bzw. Einrasten montierbar ist.

Die Fig. 9 zeigt den systematischen Aufbau von zwei prismenförmigen Auslegern 13 der Lagerteile 3, die nebeneinander im Abstand angeordnet sind. Sofern die Klappwinkel α und β gleichgroß sind, können gegenüberliegend die gleichen Lagerteile 3 eingesetzt werden.

Entscheidend für die Packungsdichte ist hierbei, daß die untere Spitze des prismenförmigen Auslegers 13 mit der Ecke des gekippten Datenträgergehäuses 11 oder mit der Ecke des gekippten Datenträgers nahezu in Übereinstimmung ist. Im Idealfall liegen zwei in Gegenrichtung gekippte Datenträgergehäuse 11 in diesem Punkt annähernd zusammen, d.h. die Distanz bewegt sich gegen null. Hieraus ergibt sich eine erfindungswesentliche Beziehung für das Abstandsmaß h der theoretischen Spitze des Auslegers 13 in der Winkelfunktion h = D (Breite des Datenträgergehäuses) x sin α.

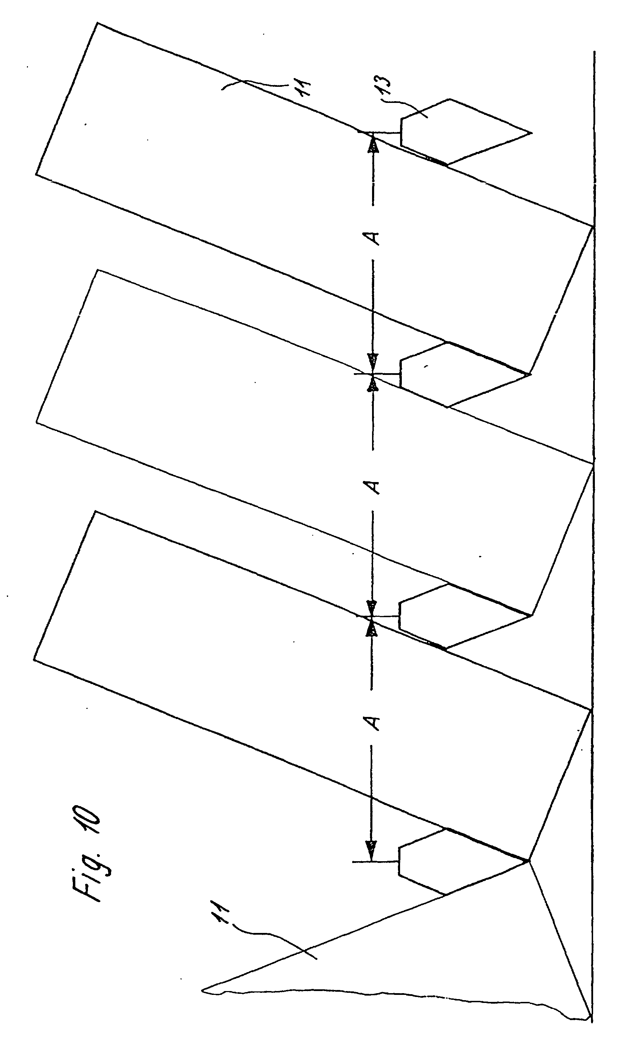

Das Maß H ist ein freiwählbares Maß, das abhängig von Festigkeiten des für die Lagerteile 3 vorgesehenen Materials ist. Daraus ergibt sich auch das Abstandsmaß A zwischen den einzelnen Lagerteilen, das in der Fig. 10 dargestellt ist.

Durch die Fig. 9 wird deutliche, daß die Übereinstimmung der Prismenspitze des Auslegers 13 mit der Gehäuseecke das entscheidende Merkmal für eine hohe Pakkungsdichte ist.

Im Unterschied zu den bekannten Vorrichtungen weist diese erfindungsgemäße Konstruktion den Vorteil auf, daß die Bodenplatte des Basisprofils 2 das Auflager für die Datenträgergehäuse oder Datenträgerhüllen oder für den mehreckigen Datenträger bildet und daß Ausleger 13 der Lagerteile im Abstand von der Bodenfläche angeordnet sind, wobei die mit Stütz- und Anlageflächen versehenen Ausleger 13 prismenförmig ausgebildet sind.

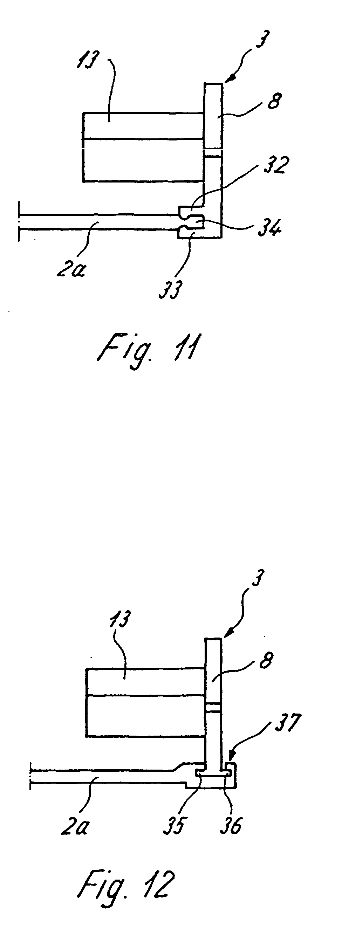

Aus den Fig. 11 und 12 ergibt sich, daß das Basisprofil auch dahingehend abgewandelt werden kann, daß eine Bodenplatte 2a vorgesehen wird, die formschlüssig mit den Lagerteilen 3 und zwar mit den Grundplatten 8 der Lagerteile 3 verbunden ist.

Bei der Ausführungsform nach der Fig. 11 weisen die Grundplatten 8 im unteren Längsrandbereich zwei Randleisten 32,33 auf, die eine hinterschnittene Verankerungsnut für eine Längsrandstreifen 34 der Bodenplatte 2a bilden.

Bei dem Ausführungsbeispiel nach der Fig. 12 sind die Grundplatten 8 am unteren Längsrand mit nach innen und nach außen sich erstreckenden Stegen 35,36 ausgerüstet, die in eine hinterschnittene Verankerungsnut 37 der Bodenplatte 2a eingreifen.

Auch bei diesen Ausführungsformen nach den Fig. 11 und 12, bei denen die Grundplatten 8 die seitlichen Schenkel der im Querschnitt U-förmigen Aufnahme der Vorrichtung bilden, besteht die Möglichkeit, zwischen zwei Lagerteilen oder zwischen zwei Lagerteilgruppen Distanzplatten einzusetzen und die in den Grundplatten der Lagerteile 3 vorgesehenen Rastausnehmungen zum Einsetzen von Kopplungsstükken zu verwenden, so daß sich zwischen den einzelnen die seitlichen Schenkel bildenden Bauteilen ein Verbund ergibt.

Die Ausführungsform der Vorrichtung nach den Fig. 15 und 16 setzt sich aus zwei in Abstand voneinander angeordneten Profilen 40 zusammen, die jeweils eine Bodenplatte 41, Stützstege 42 und Lagerteile 43 aufweisen. Diese einstückig miteinander verbundenen Bauteile stellen Baueinheiten dar, die aus einem Strangpreßprofil abgetrennt werden. Wie die Fig. 15 und 16 zeigen, sind die Profile 40 kammartig ausgebildet und werden an den Längsrändem einer U-förmigen Aufnahme oder, wie in Fig. 15 dargestellt, an den Längsrändem eines Faches eines Möbelkorpus angeordnet. Die Fig. 15 zeigt die Seitenwände 44 des Faches. Die gestaltung des Raumes zwischen den Stützstegen 42 und Lagerteilen 43 entspricht der Gestaltung des Raumes zwischen den Lagerteilen der übrigen Ausführungsformen. Das Datenträgergehäuse 11 stützt sich an der Bodenplatte 41 ab. Die Ausnehmung 19 der Lagerteile 43 kann den Lagerzapfen eines Registerblattes 5 aufnehmen. Die Anlageflächen der Lagerteile entsprechen den Anlageflächen 14,15,16 und 17 der Lagerteile nach der Fig. 4. Die Befestigung der Profile 40 am Möbelkorpus o.dgl. kann mittels eines Klebers oder mittels Schrauben vorgenommen werden.

## Patentansprüche

1. Vorrichtung zur Aufnahme von mehreckigen Datenträgern oder von in mehreckigen Gehäusen oder Hüllen angeordneten Datenträgern, die jeweils zwischen zwei nach innen ragenden, mit Stütz-, Anlage- oder Anschlagflächen versehenen Auslegern von Lagerteilen zwischen einer nach vorn und einer nach hinten geneigten Schräglage verschwenkbar sind, wobei die Ausleger prismenförmig ausgebildet und im Abstand von dem Boden einer U-förmigen Aufnahme angeordnet sind, **dadurch gekennzeichnet, dass** die nach innen in den Aufnahmeraum ragende Stirnseite eines jeden Auslegers offen ist, wodurch eine mit Anschlagflächen ausgestattet Ausnehmung (19) in dem Ausleger gebildet wird, in die ein Zapfen (20) eines entsprechend geformten Registerblattes (5) einfuhrbar ist.

2. Vorrichtung nach Anspruch 1, **dadurch gekennzeichnet, dass** der Aufnahmeraum im Boden- und Seitenbereich durch ein U-förmiges Basisprofil (2) begrenzt ist, dessen seitliche Schenkel (6) an der Innenseite vorgesehene, sich über die gesamte Schenkellänge erstreckende, hinterschnittene Nuten (7) aufweisen, in die die Grundplatten (8) der Lagerteile (3) einzeln oder untereinander verbunden oder gruppenweise verbunden eingeführt sind.

3. Vorrichtung nach Anspruch 2, **dadurch gekennzeichnet, dass** die Grundplatten (8) der Lagerteile (3) einer Längsseite der Aufnahme einstückig ausgeführt und zwischen den einzelnen Grundplatten (8) Sollbruchstellen vorgesehen sind.

4. Vorrichtung nach Anspruch 2 oder 3, **dadurch gekennzeichnet, dass** in den Grundplatten (3) in der Nähe der Stirnseiten die sich quer zur Längsrichtung der seitlichen Schenkel (6) erstrecken, zu den Stirnseiten geöffnete Rastausnehmung (9) vorgesehen sind und die Rastausnehmungen (9) zweier benachbarter Grundplatten untereinander verbunden sind.

5. Vorrichtung nach Anspruch 4, **dadurch gekennzeichnet, dass** die Rastausnehmungen (9) zweier benachbarter Grundplatten symmetrisch zu der Trennungslinie zwischen den Grundplatten ausgebildet.

6. Vorrichtung nach Anspruch 5, **dadurch gekennzeichnet, dass** die Rastausnehmungen pfeilförmig ausgebildet sind.

7. Vorrichtung nach einem der Ansprüche 4 bis 6, **dadurch gekennzeichnet, dass** in die Rastausnehmungen zweier benachbarter Grundplatten ein Kopplungsstück eingesetzt ist.

8. Vorrichtung nach Anspruch 4, **dadurch gekennzeichnet, dass** die Aufnahme Endkappen (4) aufweist, die an der Innenseite mit einem in eine Rastausnehmung der angrenzenden Grundplatte einführbaren Kopplungsstück versehen sind.

9. Vorrichtung nach Anspruch 8, **dadurch gekennzeichnet, dass** die Endkappen (4) aus einem Strangprofil gefertigt sind und als Kopplungsstück einen Raststeg (10) aufweisen.

10. Vorrichtung nach Anspruch 9, **dadurch gekennzeichnet, dass** der Raststeg (10) pfeilförmig gestaltet und form- und kraftschlüssig in der zugeordneten Rastausnehmung der benachbarten Grundplatte festlegbar ist.

11. Vorrichtung nach Anspruch 1, **dadurch gekennzeichnet, dass** zwischen den Grundplatten zweier benachbarter Lagerteile (3) oder zwischen Lagerteilgruppen Distanzplatten (29) vorgesehen und an den Stirnseiten mit den Grundplatten verbunden sind.

12. Vorrichtung nach Anspruch 2, **dadurch gekennzeichnet, dass** die Grundplatten (8) einen oberen Wulstrand (24) und eine untere federnde Lippe (26) aufweisen und die Lippe (26) eine Nockenleiste (27) des U-förmigen Basisprofiles (2) hintergreift, während die hinterschnittene Nut (7) im oberen Bereich entsprechend der Kontur des Wulstrandes (24) ausgeformt ist.

13. Vorrichtung nach Anspruch 11 und 12, **dadurch gekennzeichnet, dass** die zwischen den Grundplatten der Lagerteile oder zwischen einzelnen Grundplatten eingesetzten Distanzplatten einen oberen Wulstrand und eine untere federnde Lippe aufweisen

14. Vorrichtung nach Anspruch 1, **dadurch gekennzeichnet, dass** die im Querschnitt U-förmige Aufnahme eine Bodenplatte (2 a) aufweist, die im Längsrandbereich formschlüssig mit den die seitlichen Schenkel bildenden Grundplatten (8) verbunden ist.

15. Vorrichtung nach Anspruch 14, **dadurch gekennzeichnet, dass** die Grundplatten (8) im unteren Längsrandbereich zwei Randleisten (32,33) einer hinterschnittenen Verankerungsnut für einen Längsrandstreifen (34) einer Bodenplatte (2 a) aufweisen.

16. Vorrichtung nach Anspruch 14, **dadurch gekennzeichnet, dass** die Grundplatten (8) am unteren Längsrand mit nach innen und nach außen sich erstreckenden Stegen (35,36) ausgerüstet sind, die in eine hinterschnittene, am Längsrand vorgesehene Verankerungsnut (37) der Bodenplatte eingreifen.

17. Vorrichtung nach Anspruch 1, **dadurch gekennzeichnet, dass** die untere Spitze des prismenförmigen Auslegers ( 13) mit der benachbarten Ecke des gekippten Datenträgers oder des gekippten Datenträgergehäuses zusammenfällt oder nahezu zusammenfällt.

18. Vorrichtung nach Anspruch 17, **dadurch gekennzeichnet, dass** zwei in Gegenrichtung gekippte Datenträger oder Datenträgergehäuse mit den unteren Spitze des prismenförmigen Auslegers (13) mit den einander zugewandten Ecken der Datenträger oder der Datenträgergehäuse zusammenfallen oder nahezu zusammenfallen.

19. Vorrichtung nach Anspruch 17, **dadurch gekennzeichnet, dass** h ≤ D sinα ist, wobei h das Abstandsmaß der unteren Spitze des prismenförmigen Auslegers von dem Boden der Aufnahme, D die Breite des Datenträgergehäuse und α der Winkel zwischen dem Boden des Datenträgergehäuses und dem Boden der Aufnahme ist.

20. Vorrichtung nach Anspruch 1, **dadurch gekennzeichnet, dass** die Ausnehmung (19) in ihrer Kontur der prismenförmigen Außenkontur des Auslegers (13) entspricht.

## Claims

1. Apparatus for accommodating polygonal data carriers, or data carriers arranged in polygonal housings or cases, which can each be pivoted, between a forwardly inclined position and a rearwardly inclined position, between two inwardly projecting bearing-part extension arms provided with supporting surfaces, abutment surfaces or stop surfaces, the extension arms being of prismatic design and being spaced apart from the bottom of a U-shaped mount, **characterized in that** that end side of each extension arm which projects inwards into the accommodating space is open, as a result of which a recess (19) provided with stop surfaces is formed in the extension arm, it being possible to introduce a stub (20) of a correspondingly shaped index card (5) into this recess.

2. Apparatus according to Claim 1, **characterized in that** the accommodating space is bounded in the bottom and side regions by a U-shaped base profile (2), of which the lateral legs (6) have undercut grooves (7) which are provided on the inside, extend over the entire leg length and into which the base plates (8) of the bearing parts (3) are introduced individually or in a state in which they are connected to one another or connected in groups.

3. Apparatus according to Claim 2, **characterized in that** the base plates (8) of the bearing parts (3) of a longitudinal side of the mount are configured in one piece, and predetermined breaking points are provided between the individual base plates (8).

4. Apparatus according to Claim 2 or 3, **characterized in that** the base plates (3), in the vicinity of the end sides extending transversely to the longitudinal direction of the lateral legs (6), contain latching recesses (9) which are open towards the end sides, and the latching recesses (9) of two adjacent base plates are connected to one another.

5. Apparatus according to Claim 4, **characterized in that** the latching recesses (9) of two adjacent base plates are formed symmetrically in relation to the separating line between the base plates.

6. Apparatus according to Claim 5, **characterized in that** the latching recesses are of arrow-like design.

7. Apparatus according to one of Claims 4 to 6, **characterized in that** a coupling component is inserted into the latching recesses of two adjacent base plates.

8. Apparatus according to Claim 4, **characterized in that** the mount has end caps (4) which are provided, on the inside, with a coupling component which can be introduced into a latching recess of the adjacent base plate.

9. Apparatus according to Claim 8, **characterized in that** the end caps (4) are produced from an extruded profile and have a latching crosspiece (10) as the coupling component.

10. Apparatus according to Claim 9, **characterized in that** the latching crosspiece (10) is of arrow-like configuration and can be secured in a form-fitting and force-fitting manner in the associated latching recess of the adjacent base plate.

11. Apparatus according to Claim 1, **characterized in that** spacer plates (29) are provided between the base plates of two adjacent bearing parts (3), or between bearing-part groups, and are connected to the base plates on the end sides.

12. Apparatus according to Claim 2, **characterized in that** the base plates (8) have a top bead periphery (24) and a bottom resilient lip (26), and the lip (26) engages behind a protuberance strip (27) of the U-shaped base profile (2), while the undercut groove (7) is formed, in the top region, to correspond to the contour of the bead periphery (24).

13. Apparatus according to Claims 11 and 12, **characterized in that** the spacer plates inserted between the base plates of the bearing parts, or between individual base plates, have a top bead periphery and a bottom resilient lip.

14. Apparatus according to Claim 1, **characterized in that** the cross-sectionally U-shaped mount has a bottom plate (2a) which, in the longitudinal-periphery region, is connected in a form-fitting manner to the lateral-leg-forming base plates (8).

15. Apparatus according to Claim 14, **characterized in that** the base plates (8), in the bottom longitudinal-periphery region, have two peripheral strips (32, 33) of an undercut anchoring groove for a longitudinal-periphery strip (34) of a bottom plate (2a).

16. Apparatus according to Claim 14, **characterized in that** the base plates (8), at the bottom longitudinal periphery, are provided with inwardly and outwardly extending crosspieces (35, 36) which engage in an undercut anchoring groove (37) provided at the longitudinal periphery of the bottom plate.

17. Apparatus according to Claim 1, **characterized in that** the bottom tip of the prismatic extension arm (13) coincides, or more or less coincides, with the adjacent corner of the tilted data carrier or of the tilted data-carrier housing.

18. Apparatus according to Claim 17, **characterized in that** two data carriers or data-carrier housings tilted in opposite directions have the facing corners of the data carriers or of the data carrier housings coinciding, or more or less coinciding, with the bottom tip of the prismatic extension arm (13).

19. Apparatus according to Claim 17, **characterized in that** h ≤ D sinα, where h is the distance of the bottom tip of the prismatic extension arm from the bottom of the mount, D is the width of the data-carrier housing and α is the angle between the bottom of the data-carrier housing and the bottom of the mount.

20. Apparatus according to Claim 1, **characterized in that** the recess (19) corresponds, in terms of contour, to the prismatic outer contour of the extension arm (13).

## Revendications

1. Dispositif pour accueillir des supports de données polygonaux ou des supports de données disposés dans des boîtiers ou des chemises polygonaux, qui peuvent être basculés respectivement entre deux bras de pièces de palier dépassant vers l'intérieur, dotés d'appuis, de contacts ou de surfaces de butée, entre une position oblique inclinée vers l'avant et une inclinée vers l'arrière, les bras étant configurés de forme prismatique et étant disposés à une distance du fond d'un logement en forme de U, **caractérisé en ce que** la face frontale de chaque bras, dépassant vers l'intérieur dans l'espace de logement, est ouverte, un évidement (19) doté de surfaces de butée étant ainsi formé dans le bras, dans lequel peut s'introduire un téton (20) d'une feuille à onglet (5) de forme adéquate.

2. Dispositif selon la revendication 1, **caractérisé en ce que** l'espace de logement dans la zone du fond et des côtés est limité par un profité de base (2) en forme de U dont les branches latérales (6) comportent des rainures à contre-dépouille prévues sur la face intérieure, s'étendant sur l'ensemble de la longueur de la branche, dans lesquelles les plaques de base (8) des pièces de palier (3) sont introduites individuellement ou reliées les unes aux autres ou reliées en groupes.

3. Dispositif selon la revendication 2, **caractérisé en ce que** les plaques de base (8) des pièces de palier (3) d'un côté long du logement sont exécutées en une pièce et **en ce que** des emplacements de rupture sont prévus entre les différentes plaques de base (8).

4. Dispositif selon la revendication 2 ou 3, **caractérisé en ce que** dans les plaques de base (8), au voisinage des faces frontales qui s'étendent transversalement par rapport à la direction longitudinale des branches latérales (6), sont prévus des évidements d'encliquetage (9) ouverts vers les faces frontales et **en ce que** les évidements d'encliquetage (9) de deux plaques de base voisines sont reliés ensemble.

5. Dispositif selon la revendication 4, **caractérisé en ce que** les évidements d'encliquetage (9) de deux plaques de base voisines sont configurés symétriquement par rapport à la ligne de séparation entre les plaques de base.

6. Dispositif selon la revendication 5, **caractérisé en ce que** les évidements d'encliquetage sont configurés en forme de flèches.

7. Dispositif selon l'une quelconque des revendications 4 à 6, **caractérisé en ce qu'**une pièce d'accouplement est incorporée dans les évidements d'encliquetage de deux plaques de base voisines.

8. Dispositif selon la revendication 4, **caractérisé en ce que** le logement comporte des capuchons d'extrémité (4) qui sont dotés à la face intérieure d'une pièce d'accouplement pouvant être introduite dans un évidement d'encliquetage de la plaque de base contiguë.

9. Dispositif selon la revendication 8, **caractérisé en ce que** les capuchons d'extrémité (4) sont fabriqués en un profilé filé et comportent une nervure d'arrêt (10) comme pièce d'accouplement.

10. Dispositif selon la revendication 9, **caractérisé en ce que** la nervure d'arrêt (10) est configurée en forme de flèche et peut être immobilisée par conjugaison de forme et par adhérence dans l'évidement d'encliquetage correspondant de la plaque de base voisine.

11. Dispositif selon la revendication 1, **caractérisé en ce que** des plaques entretoises (29) sont prévues entre les plaques de base de deux pièces de palier (3) voisines ou entre les groupes de pièces de palier et **en ce qu'**elles sont reliées au niveau des faces frontales aux plaques de base.

12. Dispositif selon la revendication 2, **caractérisé en ce que** les plaques de base (8) comportent un bord supérieur à bourrelet (24) et une lèvre inférieure élastique (26) et **en ce que** la lèvre (26) accroche par derrière une barrette de came (27) du profilé de base en forme de U (2), tandis que la rainure à contre-dépouille (7) est configurée dans sa partie supérieure en fonction du contour du bord à bourrelet (24).

13. Dispositif selon les revendications 11 et 12, **caractérisé en ce que** les plaques entretoises insérées entre les plaques de base des pièces de palier ou entre les différentes plaques de base comportent un bord supérieur à bourrelet et une lèvre inférieure élastique.

14. Dispositif selon la revendication 1, **caractérisé en ce que** le logement dont la section est en forme de U comporte une plaque de fond (2a) qui est reliée dans la zone du bord longitudinal par conjugaison de forme avec les plaques de base (8) formant les branches latérales.

15. Dispositif selon la revendication 14, **caractérisé en ce que** les plaques de base (8) comportent dans la zone inférieure du bord longitudinal deux barrettes de bordure (23, 33) d'une rainure d'ancrage à contre-dépouille pour une bande de bordure longitudinale (34) d'une plaque de fond (2a).

16. Dispositif selon la revendication 14, **caractérisé en ce que** les plaques de base (8) sont équipées au bord inférieur longitudinal de nervures (35, 36) s'étendant vers l'intérieur et vers l'extérieur, qui viennent en prise dans une rainure d'ancrage (37) à contre-dépouille de la plaque de base, prévue sur le bord longitudinal.

17. Dispositif selon la revendication 1, **caractérisé en ce que** la pointe inférieure du bras en forme de prisme (13) coïncide ou coïncide presque avec le coin voisin du support de données basculé ou du boîtier de support de données basculé.

18. Dispositif selon la revendication 17, **caractérisé en ce que** deux supports de données ou deux boîtiers de supports de données basculés en sens opposé coïncident ou coïncident presque, par les coins des supports de données ou des boîtiers de supports de données tournés l'un vers l'autre, avec la pointe inférieure du bras en forme de prisme (13).

19. Dispositif selon la revendication 17, **caractérisé en ce que** h ≤ D sin α, sachant que h est la cote de distance entre la pointe inférieure du bras en forme de prisme et le fond du logement, D la largeur du boîtier de support de données et α l'angle entre le fond du boîtier de support de données et le fond du logement.

20. Dispositif selon la revendication 1, **caractérisé en ce que** l'évidement (19) correspond dans son contour au contour extérieur en forme de prisme du bras (13).
